# EUROPEAN PATENT SPECIFICATION

(11) **EP 4 509 883 B1**
(45) Date of publication and mention of the grant of the patent: **29.07.2026**
(21) Application number: 24179733.1
(22) Date of filing: 03.06.2024
(51) Int. Cl.: G01V 8/16, G01V 11/00, B08B 3/12

(54) **OPTOACOUSTIC MEASURING METHOD AND CAVITOMETER THEREOF**
OPTOAKUSTISCHES MESSVERFAHREN UND DAFÜR ENTSPRECHENDES KAVITOMETER
PROCÉDÉ DE MESURE OPTOACOUSTIQUE ET CAVITOMÈTRE ASSOCIÉ

(30) Priority: 01.06.2023 IT 202300011295
(43) Date of publication of application: 19.02.2025
(62) Divisional of application: 24202725.8
(73) Proprietor: Istituto Nazionale di Ricerca Metrologica (I.N.RI.M.), 10135 Torino (IT)
(72) Inventor: TROIA, Adriano, 10135 TORINO (IT)
(74) Representative: Mola, Edoardo

(56) References cited:
- WO-A1-2022/151918
- CN-A- 113 959 943
- VIDAKOVIC M ET AL: "Identification of cavitation signatures using both optical and PZT acoustic sensors", PROCEEDINGS OF SPIE, IEEE, US, vol. 9634, 28 September 2015 (2015-09-28), pages 963465 - 963465, XP060057363, ISBN: 978-1-62841-730-2, DOI: 10.1117/12.2194614
- JENDERKA K V ET AL: "Investigation of spatial distribution of sound field parameters in ultrasound cleaning baths under the influence of cavitation", ULTRASONICS, IPC SCIENCE AND TECHNOLOGY PRESS LTD. GUILDFORD, GB, vol. 44, 22 December 2006 (2006-12-22), pages e401 - e406, XP025009208, ISSN: 0041-624X, [retrieved on 20061222], DOI: 10.1016/J.ULTRAS.2006.05.042

## Description

### TECHNICAL FIELD

The present invention relates to a measurement instrument for cavitation, i.e., a cavitometer, and a corresponding measurement method for obtaining relevant data to characterize a cavitation phenomenon. The measurement method and instrument are preferably, but not exclusively, used in an ultrasonic bath, e.g., for cleaning mechanical components.

### BACKGROUND ART

Currently, data representing a cavitation phenomenon can be obtained either via an acoustic sensor, such as a piezoelectric hydrophone for detecting pressure waves within a liquid, or through an optical fiber sensor configured to detect pressure waves in cases of intense phenomena such as shock waves or focused ultrasonic fields.

In the first case, overall data are obtained which can be influenced by reverberation waves in localized cases and are thus subject to interference. In the second case, localized data are obtained. Cavitation varies significantly in intensity; i.e., the physical conditions of the liquid vary greatly with such intensity, and there is a need, especially at medium-high cavitation powers, to provide a measurement method and instrument capable of detecting data representative of both inertial cavitation and supercavitation, for example, with reference to reactors and ultrasonic baths.

"Identification of cavitation signatures using both optical and PZT acoustic sensors", Vidakovic M. et al., Proceedings of SPIE, vol. 9634, 28 September 2015, pages 963465-963465, describes a measurement method and a device comprising a piezoelectric sensor and a optic fibre sensor based on a bragg fiber grating.

CN 113 959 943 A describes a system and method for detecting cavitation comprising a optic fibre sensor comprising a planar fiber optic probe transmitting an optical signal and receiving a reflected optical signal. "Investigation of spatial distribution of sound field parameters in ultrasound cleaning baths under the influence of cavitation", Jenderka V et al., Ultrasonics, IPC science and technology press ltd., vol. 44, 22 December 2006, pages e401-e406, describes a method for detecting cavitation comprising an optical fibre sensor and comparing integrated power in spaced frequency bands.

### OBJECTS AND SUMMARY OF THE INVENTION

The aim of the present invention is to provide a measurement method and device that delivers enhanced data on a cavitation phenomenon so as to make measurements accurate under various cavitation intensity conditions.

The objective of the invention is achieved through a measurement method comprising the following steps:
- Detecting a first time series of data of a cavitation phenomenon using a dynamic pressure sensor;
- Detecting a second time series of data of the same cavitation phenomenon using an optical fiber sensor having a light emission terminal and a light reception terminal arranged to detect the passage of bubbles generated during cavitation in front of the terminals;
- Performing a first and a second frequency analysis (e.g., FFT) of the first time series over a first frequency range (e.g., 1-300 KHz) and a second frequency range (e.g., 1-4 MHz), where the first frequency range is lower and non-overlapping with the second frequency range;
- Performing a third frequency analysis (e.g., FFT) of the second time series in a third frequency range of less than 500 KHz;
- Displaying first data generated through the first and second frequency analyses representing stable and inertial cavitation; and second data generated from the first, second, and third frequency analyses representing supercavitation.

According to the invention, through the synergistic effect of a dynamic pressure wave sensor and a scattering optical sensor, it is possible to obtain both data related to inertial cavitation and data related to supercavitation.

Through the data from the dynamic pressure sensor, it is also possible to detect parameters representative of stable cavitation. This is particularly useful when it is necessary to verify the operating conditions of ultrasonic baths with an ultrasonic source, such as a sonicator, having a maximum power of 6 kW and a frequency between 10 and 50 kHz. When the method of the invention is applied under such conditions, it is also possible to identify supercavitation by visualizing at least one subharmonic of the primary frequency of the sonicator. Advantageously, based on the aforementioned, a display screen indicates either inertial cavitation or supercavitation. According to a preferred embodiment, the time series of the optical sensor is synchronized with position information of the sensor itself, e.g., within the bath. These data can be manually entered by the operator through an I/O interface such as a keyboard and are qualitative, or there is a position sensor, e.g., a laser rangefinder, that generates a time series of position data synchronized with the time series of scattering data from the optical sensor. The laser rangefinder allows the same optical fibers to be used for position measurement, or alternatively, the sensors can be mounted on a three-axis mobile structure with position sensors on each axis.

The objective of the present invention is also achieved through a measurement device comprising a dynamic pressure sensor, e.g., a hydrophone; an optical fiber sensor with a light emission terminal and a light reception terminal arranged to detect the passage of bubbles generated during cavitation in front of the terminals; and an electronic control unit connected for data exchange with the dynamic pressure sensor and the optical fiber sensor, programmed to:
- Perform a first and second frequency analysis, e.g., FFT, of the signal from the dynamic pressure sensor over a corresponding first frequency range, e.g., 1-300 KHz, and a second frequency range, e.g., 1-4 MHz, where the first frequency range is lower and non-overlapping with the second frequency range;
- Perform a third frequency analysis, e.g., FFT, of the signal from the optical fiber sensor in a third frequency range below 500 KHz;
- Perform a fourth frequency analysis, e.g., FFT, of the signal from the optical fiber sensor in relation to the subharmonic frequency based on a primary frequency of the source generating the cavitation phenomenon, e.g., the first subharmonic obtained by halving the operating frequency of the ultrasonic bath;
- Generate a cavitation state parameter based on said frequency analyses.

Through the method and device of the present invention, it is possible to identify local and overall characteristic parameters of cavitation that are correlated with different levels of cavitation intensity, so that a single device/measurement campaign can effectively detect a cavitation phenomenon of any intensity level. In particular, the types of sensors used and the frequency ranges allow data to be enhanced, avoiding interferences that occur with increasing intensity, e.g., due to bubble clouds when cavitation is violent and/or due to destructive or constructive pressure wave interferences and/or shielding phenomena caused by the presence of large bubbles that absorb pressure waves. The sensor signals represent the same cavitation phenomenon, i.e., the sensors detect simultaneously for at least an interval of time during the cavitation phenomenon. Preferably, the signals are subsequently synchronized, but since they are frequency analyses, precise results can also be obtained with data having small time shifts. Preferably, the optical sensor is an array of optical fibers.

According to a preferred embodiment, the dynamic pressure sensor and the optical fiber sensor are spaced at a known distance during detection, preferably no more than 2 centimeters from each other, and even more preferably no more than 1 centimeter. In this way, a spatial relationship between the two sensors is established so that it can be reasonably assumed that both sensors are exposed to the same local conditions of the liquid and the cavitation phenomenon.

According to a preferred embodiment, the measurement device comprises an elongated support, with the emission and reception terminals of the optical fiber sensor arranged at one end of the elongated support and the dynamic pressure sensor spaced from the end on the support. In this way, it is simple to create a sensor assembly to collect data on which to perform the cavitation analysis according to the present invention.

According to a preferred embodiment, the emission terminals comprise a first plurality of end faces of a first plurality of optical fibers, and the reception terminals comprise a second plurality of end faces of a second plurality of optical fibers. The first and second plurality of optical fibers are positioned adjacent to each other along the said elongated support, with the dynamic pressure sensor disposed laterally to the first and second plurality of optical fibers.

Other advantages of the present invention are discussed in the description and cited in the dependent claims.

### BRIEF DESCRIPTION OF THE DRAWINGS

The invention is described below based on non-limiting examples illustrated for exemplary purposes in the following figures, which respectively refer to:
- Fig. 1 is a schematic view of an integrated sensor with a block diagram for performing the optoacoustic measurement of cavitation according to the present invention;
- Fig. 2 is an exemplary diagram of the information generated by the device and method of the present invention.

### DETAILED DESCRIPTION OF THE INVENTION

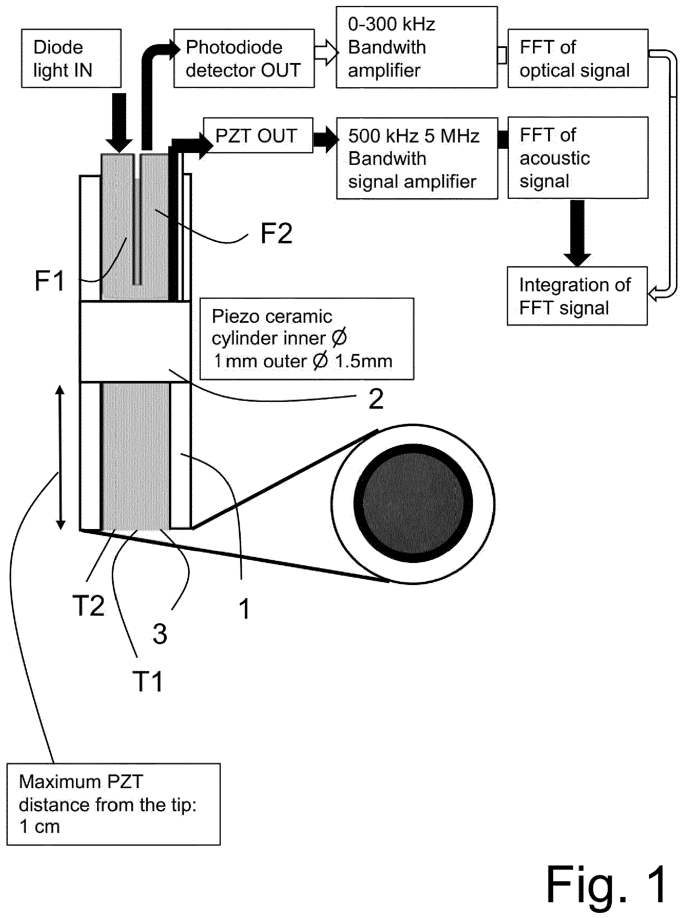

Figure 1 illustrates an integrated probe, denoted overall by 1, comprising a dynamic pressure sensor 2 and an optical fibre sensor 3. The dynamic pressure sensor 2, e.g., a hydrophone, measures the pressure variation induced in a liquid by the propagation of pressure waves, and the optical fibre sensor 3 can detect the presence of bodies, including gaseous ones like bubbles, in the liquid. These bodies cause a reflection/refraction of light in the liquid. Specifically, the reception fibre optic bundle detects a variation in light intensity (light/shadow variation), and this variation is monitored over time.

The signals generated by sensors 2 and 3 during the detection of the same cavitation phenomenon are subsequently analysed in frequency, e.g., through a Fast Fourier Transform (FFT), to obtain an integral value indicative of the frequency and intensity of the bubble population. By identifying appropriate frequency intervals for detailed analysis to gather useful information for identifying physical phenomena associated with various cavitation intensities, e.g., the presence of bubble clouds, destructive/constructive acoustic interferences, etc., the raw signals from sensors 2 and 3 are amplified using suitable amplifiers within these representative frequency intervals, and the amplified signals are then processed for frequency analysis. Specifically, a first frequency interval is low, e.g., below 400 KHz, and a second frequency interval is higher, e.g., starting from 1 MHz for the signal from the dynamic pressure sensor 2. Regarding the optical fibre sensor 3, a third interval is also below 400 KHz, preferably coinciding with the first interval, and a fourth interval is limited to at least one subharmonic frequency of the vibration source, including ultrasonic, generating the cavitation. This interval, which can be a single frequency, i.e., the first subharmonic, is preferably input by a user via an I/O interface, such as a keyboard with a screen, while the other intervals are pre-defined and do not vary between successive measurements of different cavitations.

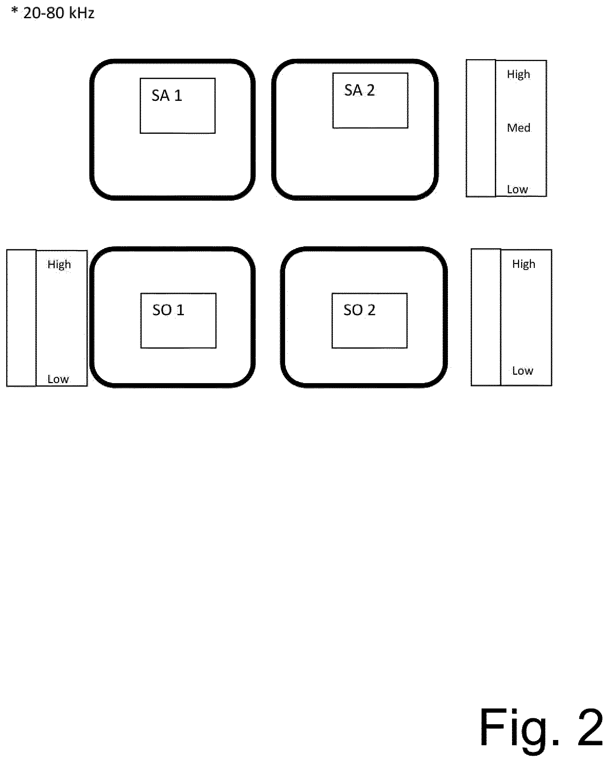

Figure 2 schematically illustrates how to interpret the four frequency analyses generated, i.e., SA1 with reference to the first frequency interval, SA2 with reference to the second frequency interval, SO1 with reference to the third frequency interval, and SO2 with reference to the fourth frequency interval. Specifically:
- In the case of low cavitation, the integral values of SA1 and SA2 are low;
- Increasing cavitation is identified by an increase in the integral value of SA2, with the presence of the SO1 signal indicating the spatial zones where cavitation is increasing. During the increase, the SA1 signal remains stable or shows a non-representative trend of the increasing cavitation;
- Supercavitation, i.e., an intense bubble cloud in transient cavitation, is represented by the combination of a constant or decreasing SA1 signal, a saturated SA2 signal, and an increasing or saturated SO1 signal;
- Supercavitation is also represented by a constant or decreasing SA1 signal, a constant or decreasing SA2 signal, a saturated SO1 signal, and an increasing SO2 signal caused by subharmonic frequencies that are indicators of the presence of low-frequency mechanical phenomena, i.e., in the range of 20-80 KHz.

It is advantageous, in order to expose both sensors 2, 3 to physical conditions that can be considered equal, for the sensors 2, 3 to be spaced no more than 2 centimetres apart, preferably no more than 1 centimetre apart. An operational embodiment involves incorporating the dynamic pressure sensor 2 and the optical fibre sensor 3 into a single probe on a single rigid support S so that the distance between the sensors 2, 3 is fixed and predetermined. The rigidity of the support relates to the non-interference with the detection of sensors 2, 3 concerning the measured frequencies. With reference to applications for ultrasonic baths, common metalworking materials such as steel pipes exhibit suitable characteristics.

Preferably, the support is elongated and surrounds a first and a second plurality of optical fibres F1, F2 defining corresponding light emission and reception terminals T1, T2. As is known, the pluralities of optical fibres F1, F2 are separated from each other to be respectively connected to a light source, e.g., a white LED diode, and to an optical detector, e.g., a photodiode with sufficiently rapid response times for the involved frequencies. Concerning the terminals T1, T2, i.e., the end faces of the optical fibres, these faces are mixed in a bundle among emitters and receivers in a known way to create a light-emitting and receiving surface carried by the support, e.g., dual-branch fibre bundle. Preferably, the support surrounds the first and second plurality of optical fibres F1, F2, and the dynamic pressure sensor 2 is applied laterally on the support so that, concerning a cross-section of the probe, the optical fibres F1, F2 are internal, e.g., surrounded by a wall of the support, and the sensor 2 is applied externally to the wall. When the cross-section of the support wall is circular, the optical fibres F1, F2 are circumscribed in a circumference, and the sensor 2 is applied at a radial position greater than the radius of the circumference.

Preferably, the sensor 2 is no more than 2 centimetres, preferably no more than 1 centimetre, away from the terminals T1, T2, e.g., from the centre of the bundle. With reference to the time series of data generated by sensors 2, 3, it is not strictly necessary for them to be synchronized, for example, if the cavitation can be considered stable and thus two partially overlapping or even consecutive time series produce results representative of the ongoing phenomenon.

Preferably, for instance, when the intensity of cavitation is evolving, the time series of data from sensors 2, 3 are synchronized, i.e., they are detected within the same time interval. Finally, it is clear that modifications or variations can be applied to the method and device for measuring cavitation described and illustrated here without departing from the scope of protection defined by the attached claims.

## Claims

1. Measurement method comprising the steps of:
- detecting a first time series of data of a cavitation phenomenon via a dynamic pressure sensor;
- detecting a second time series of data of the same cavitation phenomenon via an optical fibre sensor having a light emission terminal (T1) and a light reception terminal (T2) arranged to detect the passage of bubbles generated during cavitation in front of the terminals;
- performing a first and a second frequency analysis, e.g., FFT, of the first time series within corresponding first frequency interval, e.g., 1-300 KHz (SA1), and second frequency interval, e.g., 1-4 MHz (SA2), wherein the first frequency interval is lower and does not overlap with the second frequency interval;
- performing a third frequency analysis, e.g. FFT, of the second time series (SO1) within a third frequency interval between 1 and 500 KHz;
- displaying first data generated by the first and second frequency analysis as representative of stable or inertial cavitation; second data generated by the first, second, and third frequency analysis as representative of supercavitation.

2. Method according to claim 1, wherein the step of displaying comprises a step of identifying inertial cavitation when increasing intensity values of the signal obtained through the second frequency analysis (SA2) are detected and identifying supercavitation when the values of the first and second frequency analysis (SA1, SA2) are constant or decreasing, and the values of the signal of the third frequency analysis (SO1) are increasing or saturated.

3. Method according to claim 2, wherein the step of displaying comprises a step of identifying stable cavitation when the values of the signal of the first frequency analysis (SA1) are stable and the second frequency analysis is below a predefined threshold, preferably below a background noise of +/- 2%.

4. Method according to any of claims 1 to 3, comprising the step of synchronizing the second time series with position information of the optical fibre sensor during the detection of the second time series.

5. Method according to claim 4, wherein the step of displaying first data also comprises the values of the third frequency analysis (SO1) and the position information.

6. Method according to any of the preceding claims, comprising the step of providing said sensors in an ultrasonic bath having an ultrasonic source and wherein the step of displaying the second data comprises at least one subharmonic of a main frequency of the ultrasonic source.

7. Measurement device comprising a dynamic pressure sensor (2), an optical fibre sensor (3) having a light emission terminal (T1) and a light reception terminal (T2) arranged to detect the passage of bubbles generated during cavitation in front of the terminals; and an electronic control unit connected in data exchange with the dynamic pressure sensor (2) and the optical fibre sensor, programmed to:
- perform a first and a second frequency analysis, e.g., FFT, of the signal from the dynamic pressure sensor within corresponding first frequency interval, e.g., 1-300 KHz, and second frequency interval, e.g., 1-4 MHz, wherein the first frequency interval is lower and does not overlap with the second frequency interval;
- perform a third frequency analysis, e.g., FFT, of the signal from the optical fibre sensor within a third frequency interval below 500 KHz;
- display on a graphical user interface first data generated by the first and second frequency analysis as representative of inertial cavitation; and second data generated by the first, second, and third frequency analysis as representative of supercavitation.

8. Measurement device according to claim 7, comprising an integrated probe including the dynamic pressure sensor (2) and the light emission and reception terminals (T1, T2) rigidly connected to each other.

9. Measurement device according to one of claims 7 or 8, wherein the light emission and reception terminals (T1, T2) and the dynamic pressure sensor (2) are spaced no more than 2 centimetres apart.

10. Measurement device according to any of claims 7 to 9, comprising an elongated rigid support surrounding a first and a second plurality of optical fibres (F1, F2) defining the corresponding light emission and reception terminals (T1, T2), said terminals (T1, T2) being arranged at one end of the elongated support, and the dynamic pressure sensor being applied laterally on the elongated support.

## Patentansprüche

1. Messverfahren, umfassend die Schritten:
- Erfassung einer ersten Zeitreihe von Daten für ein Kavitationsphänomen mittels eines dynamischen Drucksensors;
- Erfassung einer zweiten Zeitreihe von Daten für dasselbe Kavitationsphänomen mittels eines faseroptischen Sensors, der mit einem lichtemittierenden Anschluss (T1) und einem lichtempfangenden Anschluss (T2) ausgestattet ist, um den Durchgang von während der Kavitation entstehenden Blasen vor den Anschlüssen zu detektieren;
- Durchführung einer ersten und einer zweiten Frequenzanalyse, beispielsweise mittels FFT, der ersten Zeitreihe im ersten zugehörigen Frequenzbereich, beispielsweise von 1-300 kHz (SA1), und im zweiten Frequenzbereich, beispielsweise von 1-4 MHz (SA2), wobei der erste Frequenzbereich unterhalb des zweiten Frequenzbereichs liegt und diesen nicht überlappt;
- Durchführung einer dritten Frequenzanalyse, beispielsweise mittels FFT, der zweiten Zeitreihe (SA1) in einem dritten Frequenzbereich zwischen 1 und 500 kHz;
- Anzeige der ersten Daten, die durch die erste und der zweite Frequenzanalyse erzeugt wurden, als repräsentativ für eine stabile oder eine Trägheitskavitation; und der zweiten Daten, die durch die erste, zweite und dritte Frequenzanalyse erzeugt wurden, als repräsentativ für eine Superkavitation.

2. Verfahren nach Anspruch 1, wobei der Anzeigeschritt einen Schritt zur Identifizierung von einer Trägheitskavitation umfasst, wenn steigende Signalintensitätswerte der zweiten Frequenzanalyse (SA2) detektiert werden, und einen Schritt zur Identifizierung von einer Superkavitation, wenn die Werte der ersten und zweiten Frequenzanalyse (SA1, SA2) konstant sind oder abnehmen und die Signalwerte der dritten Frequenzanalyse (SO1) zunehmen oder gesättigt sind.

3. Verfahren nach Anspruch 2, wobei der Anzeigeschritt einen Schritt zur Identifizierung einer stabilen Kavitation umfasst, wenn die Signalwerte der ersten Frequenzanalyse (SA1) stabil sind und die zweite Frequenzanalyse unterhalb eines vordefinierten Schwellenwerts, vorzugsweise unterhalb eines Hintergrundrauschens von ± 2 %, liegt.

4. Verfahren nach einem der Ansprüche 1 bis 3, umfassend den Schritt der Synchronisierung der zweiten Zeitreihe mit den Positionsinformationen des faseroptischen Sensors während der Erfassung der zweiten Zeitreihe.

5. Verfahren nach Anspruch 4, wobei der Anzeigeschritt der ersten Daten auch die Werte der dritten Frequenzanalyse (SO1) und die Positionsinformationen umfasst.

6. Verfahren nach einem der vorhergehenden Ansprüche, umfassend den Schritt des Platzierens der Sensoren in einem mit einer Ultraschallquelle ausgestatteten Ultraschallbad, und wobei der Anzeigeschritt der zweiten Daten mindestens eine Subharmonische einer Grundfrequenz der Ultraschallquelle umfasst.

7. Messgerät, umfassend einen dynamischen Drucksensor (2), einem faseroptischen Sensor (3) mit einem lichtemittierenden Anschluss (T1) und einem lichtempfangenden Anschluss (T2), der so angeordnet ist, dass er den Durchgang von bei der Kavitation vor den Anschlüssen entstehenden Blasen erfasst; und eine elektronische Steuereinheit, die zum Datenaustausch mit dem dynamischen Drucksensor (2) und dem faseroptischen Sensor verbunden ist und wie folgt programmiert ist:
- Durchführung einer ersten und einer zweiten Frequenzanalyse, beispielsweise mittels FFT, des Signals des dynamischen Drucksensors in einem ersten entsprechenden Frequenzbereich, beispielsweise von 1-300 kHz, und im zweiten Frequenzbereich, beispielsweise von 1-4 MHz, wobei der erste Frequenzbereich unterhalb des zweiten Frequenzbereichs liegt und diesen nicht überlappt;
- Durchführung einer dritten Frequenzanalyse, beispielsweise mittels FFT, des Signals des faseroptischen Sensors in einem dritten Frequenzbereich unterhalb von 500 kHz;
- Anzeige der ersten Daten, die durch die erste und zweite Frequenzanalyse als repräsentativ für Trägheitskavitation generiert wurden, und der zweiten Daten, die durch die erste, zweite und dritte Frequenzanalyse generiert wurden, als repräsentativ für Superkavitation auf einer grafischen Benutzeroberfläche.

8. Messvorrichtung nach Anspruch 7, umfassend eine integrierte Sonde mit dem dynamischen Drucksensor (2) und den fest miteinander verbundenen Lichtsende- und - empfangsanschlüssen (T1, T2).

9. Messvorrichtung nach Anspruch 7 oder 8, wobei die Lichtemissions- und Empfangsanschlüsse (T1, T2) und der dynamische Drucksensor (2) einen Abstand von höchstens 2 Zentimetern aufweisen.

10. Messvorrichtung nach einem der Ansprüche 7 bis 9, umfassend eine längliche starre Halterung, die eine erste und eine zweite Vielzahl von optischen Fasern (F1, F2) umschließt, welche die entsprechenden Lichtemissions- und Empfangsanschlüsse (T1, T2) bilden, wobei die Anschlüsse (T1, T2) an einem Ende der länglichen Halterung angeordnet sind und der dynamische Drucksensor seitlich an der länglichen Halterung angebracht ist.

## Revendications

1. Procédé de mesure comprenant les étapes suivantes :
- détecter une première série temporelle de données d'un phénomène de cavitation via un capteur de pression dynamique ;
- détecter une deuxième série temporelle de données du même phénomène de cavitation via un capteur à fibre optique, muni d'un terminal d'émission de lumière (T1) et d'un terminal de réception de lumière (T2), disposér pour détecter le passages de bulles générées pendant la cavitation avant les terminaux ;
- effectuer une première et une deuxième analyse de fréquence, par exemple FFT, de la première série temporelle dans le premier intervalle de fréquence correspondant, par exemple 1-300 KHz (SA1), et le deuxième intervalle de fréquence, par exemple 1-4 MHz (SA2), dans lequel le premier intervalle de fréquence est inférieur et ne chevauche pas le deuxième intervalle de fréquence ;
- effectuer une troisième analyse de fréquence, par exemple FFT, de la deuxième série temporelle (SO1) dans un troisième intervalle de fréquence entre 1 et 500 KHz ;
- affichage des premières données générées par la première et la deuxième analyse de fréquence comme représentatives de la cavitation stable ou inertielle ; deuxièmes données générées par la première, la deuxième et la troisième analyse de fréquence comme représentatives de la supercavitation.

2. Procédé selon la revendication 1, dans lequel l'étape d'affichage comprend une étape d'identification de la cavitation inertielle lorsque des valeurs d'intensité croissantes du signal obtenues par la deuxième analyse de fréquence (SA2) sont détectées et une étape d'identification de la supercavitation lorsque les valeurs de la première et de la deuxième analyse de fréquence (SA1, SA2) sont constantes ou décroissantes, et que les valeurs du signal de la troisième analyse de fréquence (SO1) sont croissants ou saturées.

3. Procédé selon la revendication 2, dans lequel l'étape d'affichage comprend une étape d'identification de la cavitation stable, lorsque les valeurs du signal de la première analyse de fréquence (SA1) sont stables et que la deuxième analyse de fréquence est inférieure à un seuil prédéfini, de préférence inférieur à un bruit de fond de +/- 2 %.

4. Procédé selon l'une quelconque des revendications 1 à 3, comprenant l'étape de synchronisation de la deuxième série temporelle avec les informations de position du capteur à fibre optique pendant la détection de la deuxième série temporelle.

5. Procédé selon la revendication 4, dans lequel l'étape d'affichage des premières données comprend également les valeurs de la troisième analyse de fréquence (SO1) et les informations de position.

6. Procédé selon l'une quelconque des revendications précédentes, comprenant l'étape consistant à placer lesdits capteurs dans un bain à ultrasons doté d'une source ultrasonique et dans lequel l'étape d'affichage des deuxièmes données comprend au moins une sous-harmonique d'une fréquence principale de la source ultrasonique.

7. Dispositif de mesure comprenant un capteur de pression dynamique (2), un capteur à fibre optique (3) doté d'un terminal d'émission de lumière (T1) et d'un terminal de réception de lumière (T2) agencées pour détecter le passage de bulles générées lors de la cavitation devant les terminaux ; et une unité de commande électronique connectée en échange de données avec le capteur de pression dynamique (2) et le capteur à fibre optique, programmée pour :
- effectuer une première et une deuxième analyse de fréquence, par exemple FFT, du signal provenant du capteur de pression dynamique dans le premier intervalle de fréquence correspondant, par exemple 1-300 KHz, et le deuxième intervalle de fréquence, par exemple 1-4 MHz, le premier intervalle de fréquence étant inférieur et ne chevauchant pas le deuxième intervalle de fréquence ;
- effectuer une troisième analyse de fréquence, par exemple FFT, du signal provenant du capteur à fibre optique dans un troisième intervalle de fréquence inférieur à 500 kHz ;
- afficher sur une interface utilisateur graphique les premières données générées par la première et la deuxième analyse de fréquence comme représentatives de la cavitation inertielle ; et les deuxièmes données générées par la première, la deuxième et la troisième analyse de fréquence comme représentatives de la supercavitation.

8. Dispositif de mesure selon la revendication 7, comprenant une sonde intégrée incluant le capteur de pression dynamique (2) et les terminaux d'émission et de réception de lumière (T1, T2) reliés rigidement l'un à l'autre.

9. Dispositif de mesure selon l'une des revendications 7 ou 8, dans lequel les terminaux d'émission et de réception de lumière (T1, T2) et le capteur de pression dynamique (2) sont espacés de 2 centimètres au maximum.

10. Dispositif de mesure selon l'une quelconque des revendications 7 à 9, comprenant un support rigide allongé entourant une première et une deuxième pluralité de fibres optiques (F1, F2) définissant les terminaux d'émission et de réception de lumière correspondants (T1, T2), lesdits terminaux (T1, T2) étant disposées à une extrémité du support allongé, et le capteur de pression dynamique étant appliqué latéralement sur le support allongé.
